# EUROPÄISCHE PATENTANMELDUNG

(11) **EP 2 495 473 A1**
(43) Veröffentlichungstag der Anmeldung: **05.09.2012**
(21) Anmeldenummer: 12151859.1
(22) Anmeldetag: 20.01.2012
(51) Int. Cl.: F16H 1/28

(54) **Adaptives Getriebe**

(30) Priorität: 02.03.2011 DE 102011001039
(71) Anmelder: Wittenstein AG, 97999 Igersheim (DE)
(72) Erfinder: Michel, Frank, 97990 Weikersheim (DE); Wimmer, Thomas, 97285 Tauberrettersheim (DE)
(74) Vertreter: Zimmermann & Partner

(57) **Zusammenfassung**

Maschinenelement, insbesondere Hohlrad, für ein Getriebe (1, 31) mit Innenverzahnung (40), wobei das Maschinenelement in einer Ebene senkrecht zu einer Achse (22) des Maschinenelements in zumindest zwei relativ zueinander verschiebbare Teilstücke (11, 12) geteilt ist, die an einem gemeinsamen Trägerelement (20) montiert sind, mit einem Aktuator (15 - 18) zum Verschieben eines ersten der Teilstücke (11, 12) relativ zu dem Trägerelement (20).

## Beschreibung

### Gebiet der Erfindung

Die Erfindung betrifft ein Maschinenelement nach dem Oberbegriff des Anspruchs 1 und ein Verfahren zum Betreiben eines Getriebes nach dem nebengeordneten Anspruch.

### Stand der Technik

Bei Getrieben ist insbesondere für Präzisionsstellantriebe ein geringes Verdrehflankenspiel gefordert. Gleichzeitig sollte jedoch die innere Reibung des Getriebes möglichst gering sein, um Verluste zu minimieren und eine Wärmeentwicklung im Getriebe zu verhindern.

Aus der EP 1 236 929 A1 ist es bekannt, ein Hohlrad eines Planetengetriebes in zwei Teilstücke aufzuteilen, welche über eine Stellschraube gegeneinander verdreht werden können. Auf diese Weise wird eine Möglichkeit geschaffen, das Spiel des Planetengetriebes zu vermindern.

Insbesondere bei Planetengetrieben ergibt sich außerdem das Problem, dass die verschiedenen Zahnräder, nämlich das Sonnenrad, die Planetenräder und das Hohlrad ein statisch überbestimmtes System darstellen, welches dazu führen kann, dass ein nicht hochpräzise ausgerichtetes Getriebe über den Umfang des Hohlrades die Last ungleichmäßig verteilt und unterschiedliche Verschleißgrade nach einer bestimmten Betriebsdauer auftreten. Grundsätzlich besteht ein Bedarf, Planetengetriebe mit einer möglichst hohen Lebensdauer bei geringem Spiel und geringer innerer Reibung bereitzustellen.

### Offenbarung der Erfindung

Aufgabe der Erfindung ist es, aus dem Stand der Technik bekannte Maschinenelemente für Getriebe zu verbessern. Insbesondere ist es Aufgabe der Erfindung, eine Spielreduktion zu erreichen, die Positioniergenauigkeit zu erhöhen oder die Lebensdauer von Maschinenelementen oder Getrieben zu erhöhen.

Die Aufgabe wird mit einem Maschinenelement nach Anspruch 1 und einem Verfahren nach dem nebengeordneten Anspruch gelöst. Vorteilhafte Weiterbildungen ergeben sich aus den Unteransprüchen und der folgenden Beschreibung.

Das Trägerelement ist vorzugsweise feststehend oder als Festlager ausgebildet. Das Maschinenelement ist besonders für ein Getriebe mit einer Innenverzahnung, beispielsweise ein Planetengetriebe, ein Gleitkeilgetriebe mit flexiblem Zahnkranz oder ein Getriebe mit einer innen liegenden Kurvenscheibe und radial beweglichen Zähnen geeignet. Bevorzugte Ausführungsformen des Maschinenelementes weisen Zähne für eine Verzahnung mit einem Zahnrad auf. Ein bevorzugtes Beispiel für ein Maschinenelement ist ein Zahnrad, wobei der Begriff "Zahnrad" typischerweise auch ein Hohlrad mit Innenverzahnung umfasst. Vorzugsweise umfasst das Maschinenelement zwei Teilstücke oder Hälften, wobei auch Ausführungsformen mit drei oder mehr Teilstücken möglich sind. Jedes der Teilstücke ist vorzugsweise vollständig umlaufend mit einem Zahnkranz ausgebildet. Der Ausdruck "Zahnkranz" schließt auch eine Innenverzahnung ein. Die Teilstücke sind relativ zueinander verschiebbar. Dabei ist "verschiebbar" allgemein zu verstehen, so fällt unter dem Begriff "verschiebbar" in diesem Zusammenhang sowohl eine translatorische oder eine axiale Verschiebung wie auch eine rotatorische Verschiebung. Vorzugsweise ist das Teilstück in zumindest einer der vorgenannten Richtungen verschiebbar. Zum Verschieben eines ersten der Teilstücke relativ zu dem Trägerelement und damit auch zu dem Zweiten der Teilstücke ist ein Aktuator vorgesehen. Der Aktuator ist vorzugsweise elektrisch ansteuerbar.

Vorteilhafterweise sind die Teilstücke angeordnet, so dass durch eine relative Verschiebung der Teilstücke ein Spiel des Getriebes veränderbar ist. Das Verschieben des ersten Teilstücks mit dem Aktuator bietet den Vorteil, dass das Spiel eines Getriebes mit dem Maschinenelement verringert werden kann, eine Steifigkeit eines Getriebes mit dem Maschinenelement erhöht werden kann, der Gleichlauf oder der Rundlauf verbessert werden kann und außerdem eine Weichheit im Nulldurchgang eliminiert werden kann.

Bei weiteren Ausführungsformen der Erfindung ist das Trägerelement als bewegtes Teil, insbesondere als Welle ausgeführt. Zwar weist diese Ausführungsform den Nachteil auf, dass Steuer- oder Energieversorgungsleitungen des Aktuators von einer sich drehenden Welle zu einem feststehenden Kontakt geführt werden müssen. Allerdings bietet diese Ausführungsform eine große Freiheit bei der Anpassung des Getriebes an verschiedene Betriebssituationen. Das Trägerelement ist vorzugsweise starr, das heißt als starre Welle oder als starres Festlager ausgeführt. Starr bedeutet dabei, dass die Steifigkeit des Trägerelements im Wesentlichen einer Steifigkeit entspricht, wie sie bei einer sonst an dieser Stelle auftretenden oder verwendeten Welle oder Lager üblich ist.

Vorzugsweise ist der Aktuator geeignet, um das erste Teilstück maximal um 1,5 Zähne des als Zahnrad ausgebildeten Maschinenelements zu verschieben. Vorzugsweise gilt dies für eine translatorische Verschiebung oder für eine rotatorische Verschiebung oder für beide Arten von Verschiebungen. Noch bevorzugter ist der Aktuator eingerichtet, um das erste Teilstück um maximal 1,1 Zähne, am bevorzugtesten um maximal 0,6 oder 0,3 Zähne zu verschieben. Bevorzugte maximal mögliche rotatorische Verschiebungen betragen maximal 1 ° oder bevorzugter maximal 0,5°. Ein geringer Verschiebeweg bedeutet eine kleine Ausführung des Aktuators und außerdem die Möglichkeit, Endpositionen auch in kurzer Zeit anfahren zu können.

Vorzugsweise ist das Teilstück über zumindest drei Aktuatoren mit dem Trägerelement verbunden. Drei Aktuatoren bieten den Vorteil, dass sie mit ihren Haltepunkten eine Ebene definieren und eine ausreichende Steifigkeit und Zuverlässigkeit bei der Positionierung ergeben. Vorzugsweise sind die Aktuatoren angeordnet, so dass sie eine Verschiebung in Umfangsrichtung ermöglichen. Mit zumindest drei Aktuatoren ist eine Verschiebung in allen Richtungen in der Ebene senkrecht zu der Achse des Maschinenelementes möglich sowie eine rotatorische Verschiebung des Teilstückes. Die Achse des Maschinenelementes bezeichnet typischerweise die Rotationsachse oder die Achse eines als Zahnrad ausgebildeten Maschinenelementes oder auch die Achse, zu welcher das Maschinenelement zumindest teilweise rotationssymmetrisch ist.

Bei besonders bevorzugten Ausführungsformen sind die Aktuatoren jeweils paarweise vorgesehen, wobei die paarweisen Aktuatoren jeweils gegenläufig angeordnet sind. Dies bietet den Vorteil, dass Aktuatoren verwendet werden können, welche eine bevorzugte Arbeitsrichtung aufweisen, wie beispielsweise Piezoaktoren. Bei besonders bevorzugten Ausführungsbeispielen sind drei oder noch bevorzugter vier oder mehr Aktuatorenpaare, welche bevorzugt jeweils in Umfangsrichtung wirken, vorgesehen. Vier Aktuatorenpaare bieten den Vorteil einer höheren Stabilität des Maschinenelementes. Die Aktuatoren oder die Aktuatorenpaare sind vorzugsweise zumindest im wesentlichen gleichverteilt über den Umfang angeordnet. Im Zusammenhang mit in Umfangsrichtung wirkenden Aktuatoren weist das Maschinenelement vorzugsweise eine gerade Verzahnung auf. Bei weiteren Ausführungsformen ist die Verzahnung des Maschinenelements vorzugsweise schräg. Im Zusammenhang mit einer schrägen Verzahnung wird besonders bevorzugt, dass zumindest einer der Aktuatoren oder der Aktuator angeordnet ist, so dass er eine axiale Verschiebung des ersten Teilstücks relativ zu dem Trägerelement ermöglicht. Im Zusammenhang mit der Schrägverzahnung wird erreicht, dass ein Spiel der Verzahnung verändert werden kann.

Vorzugsweise bilden die mindestens drei Aktuatoren für das erste Teilstück einen ersten Aktuatorsatz zum Verschieben des ersten Teilstücks. Bei bevorzugten Ausführungsformen ist ein zweiter Aktuatorsatz zum Verschieben des zweiten Teilstücks relativ zu dem Trägerelement vorgesehen. Der zweite Aktuatorsatz umfasst wiederum vorzugsweise mindestens drei Aktuatoren, bevorzugt vier Aktuatoren oder vier Aktuatorenpaare. Besonders bevorzugt wird eine Anordnung mit jeweils vier Aktuatorpaaren für jedes der beiden Teilstücke, wobei die Aktuatoren jeweils in Umfangsrichtung oder zumindest im Wesentlichen in Umfangsrichtung angeordnet sind. Dabei bedeutet "im Wesentlichen in Umfangsrichtung" vorzugsweise einen Winkelbereich von maximal +/- 20°, bevorzugter maximal +/-10° bezüglich der Umfangsrichtung. Eine Anordnung der Aktuatoren in Umfangsrichtung bietet den Vorteil einer Platz sparenden Anordnung. Zwei Aktuatorensätze für die beiden Teilstücke bieten den Vorteil, dass eine schnelle Relativverschiebung der beiden Teilstücke möglich ist, indem die beiden Aktuatorensätze entgegengesetzt angesteuert werden.

Vorzugsweise umfasst zumindest einer der Aktuatoren ein Piezoelement. Piezoelemente bieten den Vorteil, dass sie eine besonders schnelle mechanische Reaktion zeigen, sodass mit Aktuatoren, welche Piezoelemente umfassen, translatorische oder rotatorische Verschiebungen der Teilstücke mit einer Frequenz von bis zu 100 kHz möglich sind. Vorzugweise sind die Aktuatoren als Piezoaktoren ausgebildet, um eine schnelle Verschiebung der Teilstücke zu ermöglichen. Bei bevorzugten Ausführungsformen umfasst zumindest ein Aktuator eine Formgedächtnislegierung. Formgedächtnislegierungen bieten den Vorteil, dass sie auf thermische oder magnetische Veränderung reagieren und außerdem äußerst stabil sind.

Typischen Ausführungsformen der Erfindung sind dazu eingerichtet, um mit zumindest einem der Aktuatoren eine Kraft zu messen. Auf diese Weise ist es möglich, bspw. ein durch das Getriebe übertragenes Drehmoment zu ermitteln. Besonders bevorzugt werden Piezoelemente als Aktuatoren eingesetzt, um Kräfte zu ermitteln, welche auf die Aktuatoren wirken. Bei bevorzugten Verfahren werden die Aktuatoren in einem Mess-Betriebsmodus als Kraftmesssensoren verwendet, um ein durch das Getriebe übertragenes Drehmoment zu ermitteln.

Vorteilhafterweise ist das Maschinenelement ein Hohlrad mit Innenverzahnung. Insbesondere bei einem feststehenden Hohlrad bietet sich so der Vorteil, dass ausreichend Bauraum vorhanden ist, um die Aktuatoren und das Trägerelement vorzusehen. Das Trägerelement ist vorzugsweise fest mit einem Gehäuse eines Getriebes, dessen Teil das Hohlrad ist, verbunden oder das Trägerelement ist selbst das Gehäuse oder ein Teil des Gehäuses. Dies bietet den Vorteil einer besonders kompakten und stabilen Bauweise.

Vorzugsweise umfasst die Erfindung eine Kontrolleinheit zum Ansteuern des Aktuators oder der Aktuatoren. Vorzugsweise ist die Kontrolleinheit dazu eingerichtet, die Aktuatoren in Abhängigkeit einer Eingangsgröße anzusteuern. Als Eingangsgrößen kommen insbesondere Positionsgrößen von weiteren Zahnrädern, welche mit dem Maschinenelement in Eingriff stehen, oder von An- oder Abtriebswellen in Betracht. Dies ermöglicht eine Ansteuerung des Aktuators, so dass die Teilstücke in jeder Position von weiteren Zahnrädern, beispielsweise Planetenrädern, ideal positioniert sind, um eine möglichst weitgehende Spielfreiheit bei geringem Verschleiß zu ermöglichen. Vorteilhafte Ausführungsformen umfassen eine Kontrolleinheit mit einem Speicher zum Abspeichern eines Kennfeldes. Die Kontrolleinheit ist vorzugsweise dazu eingerichtet, den Aktuator in Abhängigkeit einer Eingangsgröße anhand von Daten des Kennfeldes anzusteuern. Die Daten des Kennfeldes umfassen vorzugsweise Informationen über geometrische Unregelmäßigkeiten des Maschinenelementes oder von weiteren Zahnrädern, welche mit dem Maschinenelement in Eingriff stehen. Auf diese Weise kann ein Rundlauf oder Gleichlauf eines Getriebes mit dem Maschinenelement verbessert werden, außerdem kann das Spiel des Getriebes verringert werden, indem die Position der Teilstücke an die jeweilige Position von weiteren Zahnrädern, welche mit dem Maschinenelement in Eingriff stehen, angepasst wird.

Eine bevorzugte Ausführungsform der Erfindung ist ein Getriebe, insbesondere ein Koaxialgetriebe, mit einem Maschinenelement, das bevorzugt als Hohlrad ausgebildet ist, in einer der oben beschriebenen bevorzugten oder erfindungsgemäßen Ausführungsformen. Ein solches Getriebe bietet den Vorteil eines verringerten Spiels bei verbessertem Gleichlauf oder Rundlauf in Kombination mit einer hohen Steifigkeit. Vorzugsweise beträgt das Verdrehspiel maximal 3 Winkelminuten, bevorzugter maximal 1 Winkelminute oder maximal 0,5 Winkelminuten. Bei bevorzugten Ausführungsformen ist das Getriebe als Planetengetriebe ausgebildet. Besonders bevorzugt werden Ausführungsformen von Planetengetrieben, bei welchen das Maschinenelement feststehend ist. Hierfür kommt das Sonnenrad in Frage, welches bei erfindungsgemäßen Ausführungsformen in zwei Teilstücke geteilt sein kann, um ein relatives Verschieben der beiden Teilstücke zueinander zu ermöglichen. Besonders bevorzugt werden Ausführungsformen, bei welchen das Hohlrad als das feststehende Maschinenelement ausgeführt ist. Auf diese Weise ergibt sich ein besonders einfacher Aufbau. Erfindungsgemäße Planetengetriebe bieten den Vorteil, dass mit Hilfe der Erfindung Rundlaufeigenschaften verbesserten werden können. Planetengetriebe sind mehrfach überbestimmte Systeme, bei denen es aufgrund von Fertigungstoleranzen zu inneren Spannungen kommen kann. Solche Spannungen können mit Hilfe der Erfindung dynamisch ausgeglichen werden. Hierbei ist zu berücksichtigen, dass die Planetenräder fertigungsbedingt unterschiedliche Toleranzlagen oder über ihren Umfang geringfügig veränderliche Radien oder Zahngeometrien aufweisen können. Wenngleich diese Geometrieunregelmäßigkeiten aufgrund von kleinen Fertigungstoleranzen äußerst gering sind, beeinflussen sie dennoch geringfügig den Rundlauf oder das Spiel in Abhängigkeit der Position und Winkelstellung der einzelnen Planetenräder. Durch die Möglichkeit, die Teilstücke je nach Winkelposition der Planetenräder dynamisch zu verschieben, lassen sich die Rundlaufeigenschaften eines erfindungsgemäßen Getriebes verbessern.

Weitere erfindungsgemäße Ausführungsformen umfassen eine innen liegende Kurvenscheibe, auch Polygon genannt, und einen zwischen dem als Hohlrad ausgebildeten Maschinenelement und der Kurvenscheibe angeordneten Zahnkranz mit radial beweglichen Zähnen. Die Zähne sind durch die Kurvenscheibe antreibbar. In der DE 102006042786 B4 ist ein entsprechendes Getriebe, allerdings ohne das erfindungsgemäße Maschinenelement, offenbart. Bei der Erfindung wird vorzugsweise das Hohlrad des in der genannten Patentschrift offenbarten Gegenstandes durch das als Hohlrad ausgebildete Maschinenelement mit zumindest zwei Teiltücken ersetzt. Auf diese Weise kann durch gegensinniges Verdrehen der Teilstücke das Spiel über den Umfang, je nachdem welche der Zähne gerade in Eingriff mit dem Zahnrad stehen, verändert werden.

Bei weiteren Ausführungsformen der Erfindung sind ein einteiliges Hohlrad, zwei Zahnkränze mit radial beweglichen Zähnen, welche die zumindest zwei Teilstücke des Maschinenelementes bilden, oder zwei innen liegende Kurvenscheiben vorgesehen. Bei Ausführungsformen mit zwei Kurvenscheiben sind diese typischerweise mit derselben Antriebswelle verbunden, wobei jedoch mindestens eine Kurvenscheibe über Aktuatoren mit der Welle verbunden ist, sodass die Kurvenscheiben gegeneinander verdreht werden können. Auf diese Weise sind ebenfalls eine Verspannung des Getriebes und eine Spielreduzierung möglich. Bei typischen Ausführungsformen wird das Maschinenelement durch die zwei Zahnkränze mit radial beweglichen Zähnen gebildet, wobei vorzugsweise jeweils mindestens vier Zähne in Achsrichtung des Getriebes in Reihe nebeneinander angeordnet sind. Durch vier Zähne in einer Reihe wird die Stabilität der Zahnlagerung erhöht, da jeweils zwei Zähne zusammen gelagert werden können, die in einem der Käfige des geteilten Maschinenelementes angeordnet sind.

Für genauere Informationen zu Getrieben mit innen liegender Kurvenscheibe, auch Kurvenscheibengetriebe genannt, wird auf die oben genannte Patentschrift verwiesen, deren Inhalt ausdrücklich in diese Anmeldung aufgenommen wird, insbesondere bezüglich der Lagerung der radial beweglichen Zähne auf der Kurvenscheibe (Bezugszeichen 7 und 8 der genannten Patentschrift), und der Lagerung der Zähne in dem Zahnkranz.

Bei bevorzugten Ausführungsformen der Erfindung sind zumindest zwei Zähne, bevorzugter mindestens drei oder mindestens vier Zähne in axialer Richtung des Getriebes nebeneinander angeordnet und zu Paketen zusammengefasst. Auf diese Weise wird die Stabilität des Getriebes verbessert und eine Verdrehung der Zähne um eine radiale Richtung des Getriebes, d.h. der Längsachse eines Zahnes, vermieden. Insgesamt lässt sich auf diese Weise in Zusammenspiel mit der Erfindung ein Getriebe mit sehr hoher Übersetzung, geringem Spiel und hoher Steifigkeit schaffen.

Ein weiterer unabhängiger Aspekt der Erfindung betrifft ein Verfahren zum Betreiben eines Getriebes in einer der oben beschriebenen bevorzugten und erfindungsgemäßen Ausführungsformen. Mit dem erfindungsgemäßen Verfahren wird der Rundlauf, der Gleichlauf oder das Spiel des Getriebes verbessert beziehungsweise verringert, wobei außerdem die Lebensdauer erhöht werden kann. Insbesondere kann der Gleichlauf, d.h. der Spielverlauf über eine gesamte Umdrehung, verbessert werden, da mit der Erfindung Unregelmäßigkeiten mechatronisch ausgeglichen werden können. Zunächst wird eine Winkellage ermittelt. Bevorzugt wird eine Winkellage einer Antriebswelle, einer Abtriebswelle, eines Planetenträgers oder von zumindest einem Planetenrad ermittelt. Diese Winkellage oder diese Winkellagen bilden die Eingangsgröße für das erfindungsgemäße Verfahren. In Abhängigkeit der Eingangsgröße wird eine Sollstellung für zumindest eines der Teilstücke des Maschinenelementes ermittelt. Aufgrund der Eingangsgröße wird ermittelt, in welcher Stellung sich das Getriebe zu einem bestimmten Zeitpunkt befindet. Besonders bevorzugt berechnet die Kontrolleinheit im Voraus anhand der Eingangsgröße zukünftige Sollstellungen zumindest einer der Teilstücke oder von mehreren Teilstücken des Maschinenelementes, um die Aktuatoren anzusteuern, so dass das Teilstück zu einem bestimmten Zeitpunkt eine für diesen Zeitpunkt bestimmte Sollstellung einnimmt. Dies bietet den Vorteil, dass für jeden Zeitpunkt das Getriebe optimal eingestellt ist. Das Kennfeld umfasst vorzugsweise für eine Mehrzahl von Stellungen, auch als Positionierungen bezeichnet, des Getriebes Informationen über Geometrieunregelmäßigkeiten, Rundlauf, Spiel oder andere geometrische Daten von Komponenten des Getriebes wie Zahnrädern, Zahnkränzen oder Kurvenscheiben. Vorzugsweise ist die Kontrolleinheit dazu eingerichtet, aus den Daten des Kennfeldes für Stellungen des Getriebes Informationen zu interpolieren. Dies bietet den Vorteil, dass der Speicherbedarf des Kennfeldes verringert wird. In einem weiteren Schritt des erfindungsgemäßen Verfahrens werden der Aktuator oder die Aktuatoren in Abhängigkeit der Sollstellung angesteuert. Besonders bevorzugt werden die Teilstücke gegenläufig verdreht, um ein besonders schnelles Anfahren einer bestimmten Relativposition zum Erreichen eines bestimmten Spiels zu gewährleisten.

Eine weitere bevorzugte Anwendung ist eine Verbesserung oder Erhöhung der Steifigkeit des Getriebes. Besonders bei Beschleunigung und hohen Drehmomenten wird eine höhere Steifigkeit als z.B. bei konstanter Geschwindigkeit benötigt. Um das Getriebe nicht dauerhaft für geringe Verformungen bei solchen Höchstbelastungen auslegen zu müssen und es somit nicht groß zu dimensionieren, kann über die Aktuatoren des erfindungsgemäßen Maschinenelements gezielt die Steifigkeit erhöht werden. Der Vorteil ist eine geringe Masse des Getriebes bei großer Steifigkeit. Damit eignet sich das Getriebe besonders für Mehrachsroboter oder andere Anwendungen, bei denen es auf geringe bewegte Massen ankommt. Mit der Erfindung lassen sich die statische und die dynamische Steifigkeit eines Getriebes erhöhen. Hierzu können die Aktuatoren in Abhängigkeit der Last bzw. der Kraft am Abtrieb angesteuert werden. Eine Messung der Kraft bzw. des Drehmoments am Abtrieb kann über Kraftsensoren erfolgen, welche z.B. als Piezoelemente oder Dehnungsmessstreifen ausgeführt sind. Bei typischen Ausführungsformen dienen die Aktuatoren selbst zur Kraftmessung. Die gemessenen Kräfte als Istwerte ermöglichen eine schnelle Ansteuerung der Aktuatoren und eine verbesserte Steifigkeit des Antriebs im Betrieb. Beispielsweise ist es möglich, bei einem in zwei Teilstücke geteilten Hohlrad die Teilstücke entgegen der Belastung zu verdrehen, um einer elastischen Verformung entgegenzuwirken und so die Steifigkeit zu erhöhen.

Vorzugsweise umfasst das erfindungsgemäße Verfahren einen Initialisierungsschritt, bei welchem das Getriebe betrieben wird, um das Kennfeld zu ermitteln. Dabei werden Winkelpositionen des Maschinenelements oder anderer Bauteile des Getriebes durchfahren, um ein umfassendes Kennfeld zu ermitteln. Das Spiel in einer Getriebepositionierung kann ermittelt werden, indem an dieser Position durch Wechselbeanspruchung das Spiel ermittelt wird. Beispielsweise wird bei einem Planetenradgetriebe das Planetenradgetriebe derart betrieben, dass für Kombinationen verschiedener Winkelstellungen der Antriebswelle, der Abtriebswelle und der Planetenräder Informationen für das Kennfeld ermittelt werden, besonders bevorzugt in Winkelschritten von kleiner als 10° Grad, bevorzugter kleiner als 3° Grad und besonders bevorzugt in Winkelschritten kleiner als 1° Grad. Auf diese Weise lassen sich die gegebenenfalls durch Interpolation für sämtliche Stellungen des Getriebes Informationen über Spiel, Rundlauf und notwendigen Anpassungen erhalten. Bei einer Ausführungsform, bei welcher das Maschinenelement als Hohlrad ausgebildet ist, werden die innen liegenden Räder, beispielsweise Sonnenrad und Planetenräder oder Kurvenscheibe mit Zahnkranz betrieben, sodass für alle möglichen Winkelpositionen in den oben genannten Winkelschritten Informationen über die Geometrie des Getriebes vorliegen, beispielsweise Informationen zum Spiel oder zum Rundlauf.

Vorteilhafterweise wird eine Ermittlung des Kennfeldes im Betrieb wiederholt. Besonders bevorzugt wird das Kennfeld nach einer bestimmten Betriebsdauer nochmals ermittelt. Auf diese Weise kann auch für ein bereits durch Benutzung abgenutztes Getriebe das Spiel angepasst werden, sodass das Getriebe auch nach längerer Betriebsdauer noch spielarm ist, indem die Aktuatoren entsprechend angesteuert werden. Vorzugsweise wird das Kennfeld nach einer bestimmten zuvor festgelegten Betriebsdauer erneut ermittelt. Eine weitere bevorzugte Möglichkeit ist, das Kennfeld neu zu ermitteln, wenn festgestellt wird, dass das Spiel des Getriebes sich um einen bestimmten Betrag erhöht hat. Vorzugweise ist die Kontrolleinheit in der Lage, das Spiel des Getriebes zu bestimmen, beispielsweise indem die Kontrolleinheit Informationen über die Winkellage der Antriebswelle und der Abtriebswelle erhält.

Vorzugsweise wird das Getriebe in einem ersten Modus und anschließend in einem zweiten Modus betrieben, wobei im ersten Modus und im zweiten Modus die Teilstücke jeweils derart positioniert werden, dass im ersten Modus ein Spiel des Getriebes größer ist als im zweiten Modus. Auf diese Weise lassen sich ein Schnellgang und ein Gang zum exakten Positionieren bereit stellen. Dies bietet den Vorteil eines schnellen Anfahrens einer groben Position und einer anschließenden exakten Positionierung mit geringem Spiel. Vorzugsweise ist die Kontrolleinheit dazu eingerichtet, das Getriebe in dem beschriebenen ersten Modus und in dem beschriebenen zweiten Modus zu betreiben.

### Kurze Beschreibung der Zeichnungen

Nachfolgend werden einige Ausführungsbeispiele der Erfindung anhand der beiliegenden Zeichnungen erläutert. Die Zeichnungen zeigen:
- Figur 1: zeigt ein Planetengetriebe in einer schematischen, geschnittenen, perspektivischen Ansicht mit einem Schnitt senkrecht zu der Achse des Planetengetriebes;
- Figur 2: zeigt das Planetengetriebe der Figur 1 in einer schematischen Schnittansicht mit einer Schnittebene, in welcher die Achse des Planetengetriebes liegt;

- Figur 3: zeigt das Hohlrad des Planetengetriebes der Figur 1 in einer schematischen Schnittansicht in einem Schnitt senkrecht zu der Achse des Hohlrades;
- Figur 4: zeigt ein weiteres Getriebe in einer schematischen geschnittenen Ansicht mit einem Schnitt senkrecht zu der Achse des weiteren Getriebes;
- Figur 5: zeigt eine schematische Draufsicht auf ein Detail des Getriebes der Figur 4;
- Figur 6: zeigt schematisch des Planetengetriebe der Figur 1 mit einer Kontrolleinheit; und
- Figur 7: zeigt in einem schematischen Ablaufdiagramm den Ablauf eines erfindungsgemäßen Verfahrens.

Beschreibung bevorzugter Ausführungsbeispiele

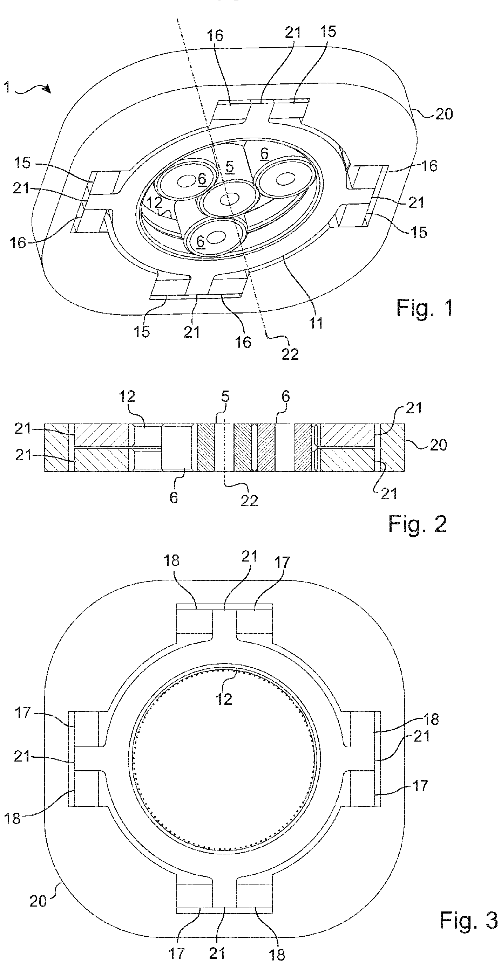

Die Fig. 1 zeigt schematisch als Getriebe ein Planetengetriebe 1 mit einem Maschinenelement, welches ein feststehendes Hohlrad des Planetengetriebes bildet. Das Planetengetriebe 1 umfasst ein Sonnenrad 5 und drei Planetenräder 6, welche um das Sonnenrad 5 herum angeordnet sind und dieses kämmen. Die Planetenräder 6 kämmen außerdem die Innenverzahung des Hohlrades. Das Hohlrad umfasst zwei Teilstücke 11 und 12, welche mittels Aktuatoren 15 - 18 an einem Trägerelement 20 montiert sind. Die Aktuatoren 15 und 16 halten das Teilstück 11 und die Aktuatoren 17 und 18 (siehe Figur 3) halten das Teilstück 12. Die Teilstücke 11, 12 weisen jeweils radial abstehende Nasen 21 auf, an welchen die in Umfangsrichtung angeordneten Aktuatoren 15 - 18 angreifen. Es sind jeweils vier Aktuatoren 15, 16, 17 und 18 vorhanden, wobei die Aktuatoren 15 und 16 jeweils vier gegenläufige Aktuatorenpaare und die Aktuatoren 17 und 18 jeweils weitere vier gegenläufige Aktuatorenpaare bilden. Die Aktuatorenpaare sind in einem Winkel von 90° gleich verteilt über den Umfang der Teilstücke 11, 12 angeordnet. Die Aktuatoren 15 und 17 wirken in eine Drehrichtung und die Aktuatoren 16 und 18 in die entgegengesetzte Drehrichtung. Die Akuatoren 15 - 18 sind im wesentlichen in Umfangsrichtung bezüglich einer Achse 22 des Hohlrades angeordnet. Die Formulierung "im wesentlichen" trägt der Tatsache Rechnung, dass die Kraftrichtung an den Kraftangriffspunkten der Aktuatoren 15 - 18 auf Grund der endlichen Dicke der Nasen 21 nicht exakt in Umfangsrichtung ausgerichtet ist. Da das Planetengetriebe 1 ein Koaxialgetriebe ist, ist die Achse 22 auch die zentrale Längsachse des Planetengetriebes 1 und die Rotationsachse des Sonnenrades 5. Außerdem rotieren die Rotationsachsen der Planetenräder 6 um die Achse 22.

Die Aktuatoren 15 - 18 umfassen Piezoelemente, welche elektrische in mechanische Energie wandeln können. Mittels der Piezoelemente ist es möglich, dass die Aktuatoren 15 - 18 in sehr kurzen Zeitspannen unterschiedliche Positionen anfahren können, so dass die Teilstücke 11, 12 mit Frequenzen von bis zu 100 kHz bewegt, also beispielsweise hin- und her- rotiert werden können. Ebenso sind translatorische Verschiebungen möglich. Der eingeschränkte Weg der Aktuatoren mit Piezoelementen ist allenfalls von geringem Nachteil, da für eine Anpassung des Spiels oder für einen verbesserten Rundlauf meist lediglich geringe Verschiebungen ausreichend sein können. Zur Vereinfachung der Zeichnungen wurden in den Zeichnungen die Verzahnungen teilweise nicht eingezeichnet.

Bei der nachfolgenden Beschreibung der weiteren Figuren werden für gleiche oder ähnliche Teile gleiche Bezugszeichen verwendet. Teilweise werden die Teile nicht noch einmal erläutert.

Die Fig. 2 zeigt schematisch in einer Schnittansicht mit einer Schnittebene, in welcher die Achse 22 des Planetengetriebes liegt, das Planetengetriebe 1 der Fig. 1. In der Schnittzeichnung sind die Nasen 21, eines der Planetenräder 6 und das Sonnenrad 5 geschnitten dargestellt. Ein weiteres der Planetenräder 6 ist teilweise durch das geschnitten dargestellte Sonnenrad 5 verdeckt.

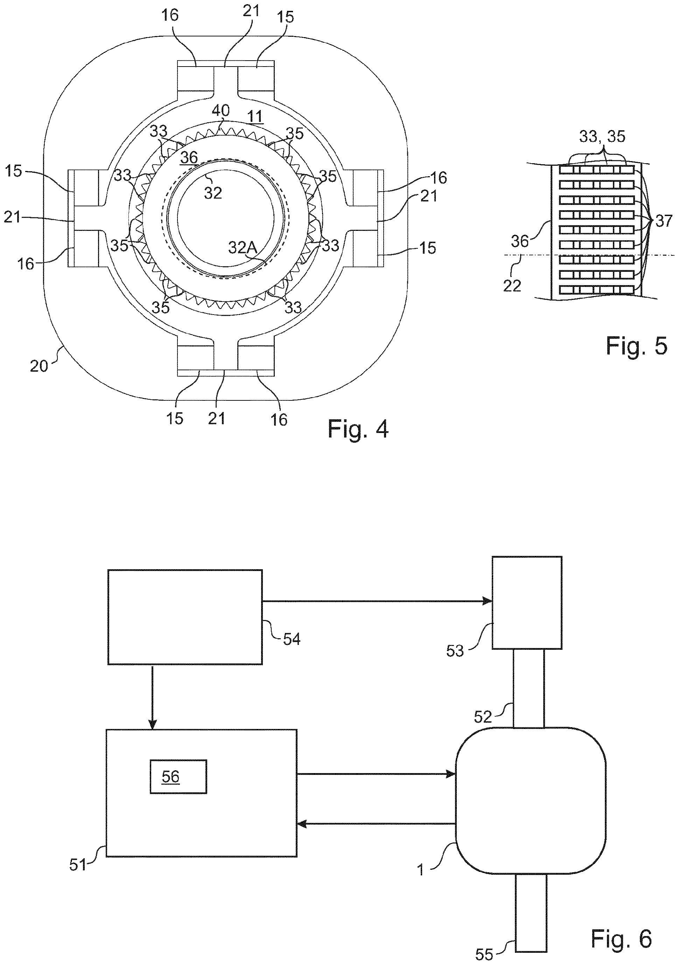

In der Fig. 3 ist das Hohlrad der Fig. 1 als erfindungsgemäßes Maschinenelement gezeigt. Die Fig. 3 zeigt die rückwärtige Ansicht des Hohlrades der Figur 1, so dass die Aktuatoren 17 und 18, welche das rückwärtige Teilstück 12 halten, dargestellt sind. Das Hohlrad kann auch bei anderen Getrieben mit Innenverzahnung 40, wie beispielsweise bei Getrieben mit Spannungskeil eingesetzt werden. Eine weitere Einsatzmöglichkeit des Hohlrades wird im Folgenden im Zusammenhang mit der Fig. 4 erläutert.

Die Fig. 4 zeigt als Getriebe ein Kurvenscheibengetriebe 31, welches sehr hohe Übersetzungen, beispielsweise von 50:1 ermöglicht. Das Kurvenscheibengetriebe 31 umfasst ein Hohlrad, welches im wesentlichen dem Hohlrad des Planetengetriebes 1 der Figur 1 entspricht und an dieser Stelle nicht noch einmal vollständig erläutert wird. Als Antriebselement umfasst das Kurvenscheibengetriebe 31 eine Kurvenscheibe 32 welche koaxial zu dem Hohlrad angeordnet ist und eine ellipsenförmige Außenkontur 32A aufweist, welche strichliert in der Fig. 4 schematisch angedeutet ist. Bei einer Drehung der Kurvenscheibe 32 werden Zähne 33 eines Zahnkranzes in radialer Richtung nach außen angetrieben und in einen Eingriff mit dem Hohlrad geschoben. An anderen Stellen des Umfangs der Kurvenscheibe 32 können andere Zähne 35 des Zahnkranzes wieder radial nach innen zurücklaufen. Die Zähne 33 befinden sich zu dem in der Fig. 3 gezeigten Zeitpunkt an einer "steigenden" Umfangsstelle der sich drehenden Kurvenscheibe 32 und die Zähne 35 an einer "fallenden" Umfangsstelle. Die verdeckten Teile der Zähne 33, 35 sind nicht strichliert dargestellt. Für weitere Informationen zu dem Kurvenscheibengetriebe 31 wird auf die Patentschrift DE 10 2006 042 786 B4 verwiesen, in welcher ein solches Getriebe genauer beschrieben wird.

Die Zähne 33 und 35 sind Teil des Zahnkranzes und sind in einem Zahnkäfig 36 radial verschieblich angeordnet. Der Zahnkäfig 36 ist mit einer Abtriebswelle (nicht gezeigt) verbunden. Im Betrieb werden die Zähne 33, 35 radial durch die Kurvenscheibe 32 und die Innenverzahnung 40 angetrieben. Da entlang des Umfangs des Zahnkäfigs 36 weniger Zähne vorhanden sind als Zahnlücken in der Innenverzahnung 40 des feststehenden Hohlrades, entsteht durch das umlaufende Eingreifen der Zähne 33, 35 in die Innenverzahnung 40 eine Drehbewegung des Zahnkäfigs 36.

Um ein Verkanten oder Verdrehen der Zähne 33, 35 bei einer gegenläufigen Drehung der Teilstücke 11, 12 des Hohlrades zu vermeiden, sind jeweils vier Zähne 33 oder 35 in axialer Richtung hintereinander in einer Zahnreihe 37 angeordnet, wie dies im Detail in der Fig. 5 gezeigt ist. Zu berücksichtigen ist, dass bei einer gegenläufigen Rotation der Teilstücke 11 und 12 beispielsweise um 1/20 einer Zahnteilung ein Teil der vier Zähne einer Zahnreihe 37 mit ihrer in Umlaufrichtung rückwärtigen Flanke und ein anderer Teil mit ihrer in Umlaufrichtung vorderen Flanke mit der Innenverzahnung 40 in Eingriff sind. Dadurch wird ein Drehmoment um eine radiale Achse auf die Zahnreihe 37 ausgeübt. Um ein Verdrehen zu verhindern, sind daher jeweils vier Zähne 33, 35 in einer Zahnreihe 37 angeordnet und in dem Zahnkäfig 36 entsprechend gefasst. Jeweils zwei Zähne 33, 35 sind gemeinsam in einem Doppelpaket gelagert, so dass eine Reihe aus vier Zähnen 33, 35 aus zwei Doppelpaketen von Zähnen 33, 35 zusammengesetzt ist.

Alternative Ausführungsformen mit geteiltem Hohlrad weisen zwei Zähne in einer Zahnreihe auf. Die zwei Zähne sind zu einem Doppelpaket zusammengefasst und gemeinsam gelagert. Das Vorsehen von zwei Zähnen bietet den Vorteil eines einfacheren Aufbaus. Bei Ausführungsformen mit zwei Kurvenscheiben oder mit zwei Zahnkränzen bzw. Zahnkäfigen bieten mindestens vier Zähne in einer Reihe besondere Vorteile im Hinblick auf die Stabilität des Getriebes.

Bei weiteren Ausführungsformen der Erfindung sind mindestens drei oder vier Teilstücke vorgesehen, welche relativ zueinander verschiebbar sind. Insbesondere bei einem Kurvenscheibengetriebe ergibt sich damit der Vorteil, dass eine Drehmomentbelastung der Zähne um eine radiale Achse des Getriebes, d. h. um eine Längsachse der Zähne, vermieden werden kann, indem die Teilstücke entsprechend angesteuert werden.

In der Fig. 6 ist das Planetengetriebe 1 der Figur 1 nochmals schematisch in Umrissen dargestellt. Zusätzlich ist in der Fig. 5 eine Kontrolleinheit 51 gezeigt, welche die Aktuatoren des Planetengetriebes 1 steuert und mit Energie versorgt. Außerdem erhält die Kontrolleinheit 51 von dem Planetengetriebe 1 Drehwinkelinformationen, welche die Position von Komponenten des Planetengetriebes 1, also beispielsweise Winkelpositionen der Antriebswelle 52, wiedergeben.

Eine Antriebswelle 52 des Planetengetriebes ist mit einem Motor 53 verbunden, welcher das Planetengetriebe 1 antreibt. Der Motor 53 wird von einer Steuerung 54 gesteuert. Abtriebsseitig des Planetengetriebes 1 ist eine Abtriebswelle 55 vorgesehen. Die Kontrolleinheit ermittelt oder erhält auch Informationen über die Winkellagen der Antriebswelle 52 oder der Abtriebswelle 55. Diese Informationen können aus den Drehwinkelinformationen des Planetengetriebes 1 ermittelt werden. Eine weitere Möglichkeit ist, die Informationen zu ermitteln, indem Daten der Steuerung 54 ausgewertet werden. In Abhängigkeit dieser Informationen und an Hand von Informationen eines in einem Speicher 56 der Kontrolleinheit 51 abgespeicherten Kennfeldes zur Spielreduktion steuert die Kontrolleinheit 51 die Aktuatoren des Planetengetriebes 1 an. Bei typischen Ausführungsformen wird lediglich die Stellung des Planetengetriebes 1 ermittelt, um aus dem Kennfeld Vorgaben für die Ansteuerung der Aktuatoren zu erhalten.

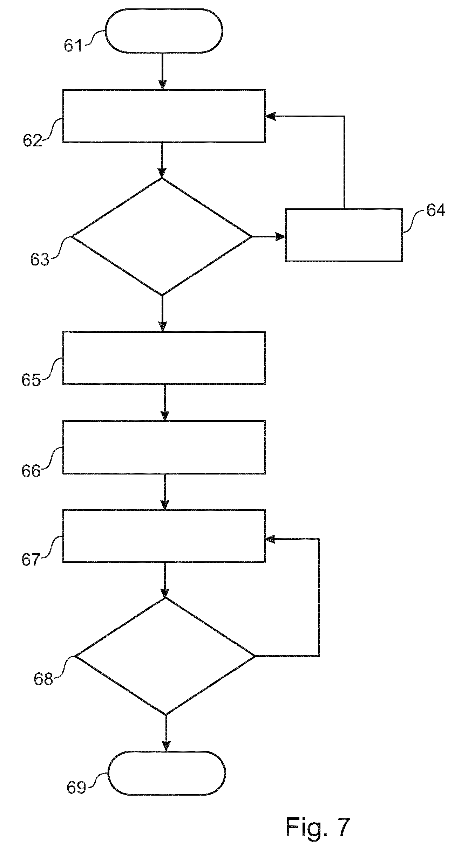

Fig. 7 zeigt den Ablauf eines erfindungsgemäßen Verfahrens zum Betrieb des Planetengetriebes 1 in einem stark schematisierten Ablaufdiagramm. In einem ersten Schritt 61 wird das Verfahren gestartet. Nachfolgend wird in einem Schritt 62 begonnen, das Kennfeld aufzunehmen. Das Kennfeld enthält Informationen über die Geometrie des Planetengetriebes 1, insbesondere zu Abweichungen der Durchmesser oder Radien der einzelnen Planetenräder 6, des Sonnenrades 5 und der Teilstücke 11, 12 des Hohlrades. Durch herstellungsbedingte Toleranzen sind die einzelnen Bauelemente beispielsweise nicht exakt kreisrund, so dass es im Betrieb zu geringfügigen Abweichungen im Rundlauf oder beim Spiel des Planetengetriebes 1 kommt, je nachdem in welcher Position sich die einzelnen Bauelemente befinden. Eine Möglichkeit zur Aufnahme der geometrischen Informationen ist, das Planetengetriebe durch Variation der Position der beiden Teilstücke 11, 12 mit unterschiedlichem Spiel zu betreiben, um zu ermitteln, welches Spiel jeweils bei verschiedenen Winkelpositionen bzw. Stellungen des Planetengetriebes 1 herrscht. So weit in dieser Anmeldung die Begriffe "Stellung", "Position" oder "Winkelposition" für das Getriebe verwendet werden ist ohne weiteren Hinweis in der Regel die Winkelposition der rotierenden Teile des Getriebes, wie bspw. Antriebswelle oder Abtriebswelle, gemeint. Weiterhin kann das Spiel bei einer Position durch gegenläufigen Betrieb des Planetengetriebes auch direkt ermittelt werden.

Bei weiteren Ausführungsformen wird ein Rundlauf des Getriebes ermittelt. Hierzu wird vorzugsweise ein Sensor, wie bspw. eine Messuhr, an der Abtriebswelle des Getriebes angeordnet, um den Rundlauf zu ermitteln.

Im Schritt 62 wird für eine erste Position des Planetengetriebes 1 ein Spiel bei verschiedenen Positionierungen der Teilstücke 11, 12 ermittelt, um eine optimale Position für die Teilstücke 11, 12 zu ermitteln. Die "optimale" Position kann bezüglich eines bestimmten oder minimierten Spiels oder bezüglich eines Rundlaufs optimiert sein. Vorteilhafterweise werden für verschiedene Anwendungen, wie Spielreduktion oder Rundlaufverbesserung, verschiedene Kennfelder abgespeichert. Anschließend wird in einem Schritt 63 abgefragt, ob noch für weitere Positionen des Planetengetriebes 1 ein Spiel ermittelt werden muss. Falls "ja", wird das Planetengetriebe 1 in einem Schritt 64 zu der weiteren Position verdreht und bei dieser Position der Schritt 62 wiederholt. Auf diese Weise wird das Kennfeld mit Informationen gefüllt. Bevorzugt werden Informationen für alle möglichen Positionierungen der Bauteile in 0,5°-Schritten des Planetengetriebes gesammelt.

Nachdem alle benötigten Informationen gesammelt wurden, wird das Kennfeld im Schritt 65 in dem Speicher der Kontrolleinheit abgespeichert. Im Schritt 66 beginnt der reguläre Betrieb des Planetengetriebes 1, wobei über zumindest einen Positionssensor, insbesondere Drehwinkelgeber an der Antriebswelle, welche mit dem Sonnenrad 5 verbunden ist, oder Drehwinkelgeber an der Abtriebswelle, welche mit den Planetenrädern 6 verbunden ist, die Stellung der Bauteile des Planetengetriebes 1 ermittelt wird. In der Regel ist ein Drehwinkelgeber ausreichend, da aus der Kinematik des Getriebes die übrigen Informationen errechnet werden können. Anschließend wird im Schritt 67 für diese Stellung oder Positionierung eine Sollstellung für die Teilstücke 11, 12 ermittelt und die Aktuatoren 15-18 entsprechend angesteuert, um das Spiel bis auf ein gewünschtes Maß zu reduzieren oder um den Rundlauf zu verbessern. Dabei ist auch vorgesehen, dass eine Steuerung, welche einen das Planetengetriebe 1 antreibenden Motor steuert, der Kontrolleinheit 51 vorgeben kann, ob das Planetengetriebe in einem ersten Modus im Schnellgang mit viel Spiel oder in einem zweiten Modus zur exakten Positionierung mit wenig Spiel betrieben werden soll. Der Schritt 67 wird wiederholt, so lange das Planetengetriebe 1 betrieben wird (Schritt 68). Das Verfahren endet ansonsten im Schritt 69.

Die Erfindung ist nicht auf die vorstehend beschriebenen Ausführungsbeispiele, insbesondere nicht auf Ausführungen mit feststehendem Hohlrad als Maschinenelement beschränkt, der Schutzumfang wird vielmehr durch die Ansprüche bestimmt.

### Bezugszeichenliste

- 1: Planetengetriebe
- 5: Sonnenrad
- 6: Planetenräder
- 11: erstes Teilstück
- 12: zweites Teilstück
- 15-18: Aktuatoren
- 20: Trägerelement
- 21: Nasen
- 22: Achse
- 31: Kurvenscheibengetriebe
- 32: Kurvenscheibe
- 33, 35: Zähne
- 36: Zahnkäfig
- 37: Zahnreihe
- 40: Innenverzahnung
- 51: Kontrolleinheit
- 52: Antriebswelle
- 53: Motor
- 54: Steuerung
- 55: Abtriebswelle
- 56: Speicher
- 61-69: Verfahrensschritte

## Patentansprüche

1. Maschinenelement, insbesondere Hohlrad, für ein Getriebe (1, 31) mit Innenverzahnung (40), wobei das Maschinenelement in einer Ebene senkrecht zu einer Achse (22) des Maschinenelements in zumindest zwei relativ zueinander verschiebbare Teilstücke (11, 12) geteilt ist, die an einem gemeinsamen Trägerelement (20) montiert sind,
**gekennzeichnet durch**
einen Aktuator (15 - 18) zum Verschieben eines ersten der Teilstücke (11, 12) relativ zu dem Trägerelement (20).

2. Maschinenelement nach Anspruch 1, **dadurch gekennzeichnet, dass** das Teilstück (11, 12) über zumindest drei Aktuatoren (15 - 18) mit dem Trägerelement (20) verbunden ist.

3. Maschinenelement nach Anspruch 2, **dadurch gekennzeichnet, dass** die mindestens drei Aktuatoren (15, 16) einen ersten Aktuatorsatz zum Verschieben des ersten Teilstücks (11) bilden, und **gekennzeichnet durch** einen zweiten Aktuatorsatz mit mindestens drei weiteren Aktuatoren (17, 18) zum Verschieben des zweiten Teilstücks (12) relativ zu dem Trägerelement (20).

4. Maschinenelement nach einem der vorhergehenden Ansprüche, **dadurch gekennzeichnet, dass** der Aktuator (15 - 18) ein Piezoelement und/oder eine Formgedächtnislegierung umfasst.

5. Maschinenelement nach einem der vorhergehenden Ansprüche, **gekennzeichnet durch** eine Kontrolleinheit (51) zum Ansteuern des Aktuators (15 - 18).

6. Getriebe (1, 31), insbesondere Koaxialgetriebe (1, 31) mit Innenverzahnung (40), mit einem Maschinenelement nach einem der vorhergehenden Ansprüche.

7. Getriebe nach Anspruch 6, **dadurch gekennzeichnet, dass** das Getriebe ein Planetengetriebe (1) ist.

8. Getriebe nach Anspruch 6, **dadurch gekennzeichnet, dass** das Getriebe (1) eine innen liegende Kurvenscheibe (32) umfasst und **gekennzeichnet durch** einen zwischen dem als Hohlrad ausgebildeten Maschinenelement und der Kurvenscheibe angeordneten Zahnkranz mit radial beweglichen Zähnen (33, 35), welche **durch** die Kurvenscheibe (32) antreibbar sind.

9. Verfahren zum Betreiben eines Getriebes (1, 31) nach einem der Ansprüche 6 bis 8, **gekennzeichnet durch** die Schritte:
- Ermitteln einer Winkellage einer Antriebswelle (52), einer Abtriebswelle (55), eines Sonnenrades, eines Hohlrades und/oder eines Planetenrades (6) als Eingangsgröße,
- Ermitteln einer Sollstellung für zumindest eines der Teilstücke (11, 12) des Maschinenelementes in Abhängigkeit der Eingangsgröße und
- Ansteuern des Aktuators (15 - 18) in Abhängigkeit der Sollstellung.

10. Verfahren nach Anspruch 9, **gekennzeichnet durch** den Schritt:
- Betreiben des Getriebes (1, 31), um das Kennfeld zu ermitteln.

11. Verfahren nach einem der Ansprüche 9 oder 10, **dadurch gekennzeichnet, dass** das Getriebe (1, 31) in einem ersten Modus und anschließend in einem zweiten Modus betrieben wird, wobei im ersten Modus und im zweiten Modus die Teilstücke (11, 12) jeweils derart positioniert werden, dass ein Spiel des Getriebes (1, 31) größer ist im ersten Modus als im zweiten Modus.
